(19) **Europäisches Patentamt / European Patent Office / Office européen des brevets**

(11) **EP 3 044 860 B1**

(12) **EUROPEAN PATENT SPECIFICATION**

(45) Date of publication and mention
of the grant of the patent:
**31.05.2017 Bulletin 2017/22**

(21) Application number: **14759214.1**

(22) Date of filing: **08.09.2014**

(51) Int Cl.:
*H02K 19/12* (2006.01)   *H02K 3/28* (2006.01)
*H02K 19/26* (2006.01)   *H02K 17/22* (2006.01)
*H02K 19/32* (2006.01)   *H02K 17/26* (2006.01)
*H02K 99/00* (2014.01)

(86) International application number:
**PCT/EP2014/069035**

(87) International publication number:
**WO 2015/078603 (04.06.2015 Gazette 2015/22)**

(54) **ELECTRIC MACHINE**

ELEKTRISCHE MASCHINE

MACHINE ÉLECTRIQUE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **28.11.2013 EP 13194936**

(43) Date of publication of application:
**20.07.2016 Bulletin 2016/29**

(73) Proprietor: **NRG Tech Ltd.
1527 Sofia (BG)**

(72) Inventor: **PETKANCHIN, Lachezar Lazarov
1527 Sofia (BG)**

(74) Representative: **Müller Schupfner & Partner
Patent- und Rechtsanwaltspartnerschaft mbB
Bavariaring 11
80336 München (DE)**

(56) References cited:
**WO-A2-88/00409       WO-A2-2012/137056
GB-A- 1 020 651       US-A1- 2008 150 494
US-A1- 2009 121 688   US-A1- 2012 286 523**

**Description**

This invention relates to an electric machine or generator or motor and to a method to operate an electric machine or generator or motor or AC generator.

In the prior art different types of electric machines (motors and generators) with wound or cage rotors are known. Such electric machines are divided into two major groups: synchronous machines and induction machines. Induction machines are quite flexible in terms of rotation speed and torque. In this context it is also known to vary the stator pole pitch and thus to further increase the flexibility of such induction machines. However, the main disadvantage of induction machines is the relatively low efficiency compared to synchronous electric machines. Al-though synchronous machines are more efficient, the efficiency is limited to only one rotation speed: the synchronous speed of the rotor with the AC frequency supplied to the machine. Thus, synchronous machines are not flexible enough.

The document US 2013/0069566 A1 discloses an electronically controlled universal motor.

Therefore, it is an object of the current invention to provide an electric machine and methods to operate an electric machine with high efficiency at different rotation speeds.

This object is achieved by means of an electric machine according to claim 1 and a method to operate an electric machine according to claim 11. Additional advantages and features of preferred embodiments of the current invention are defined in the dependent claims.

According to the invention, there is provided an electric machine, comprising a stator and a rotor, wherein the rotor is adapted to rotate relatively to the stator, and wherein the rotor comprises a rotor-switching device which is arranged at the rotor.

Expediently, the rotor-switching device comprises a rotor-control-unit and at least one switch which is adapted to electrically connect rotor-coils and/or to provide or disconnect an electric connection to a power source. In particular, the rotor-control-unit is adapted to activate preselected electrical switches at a predefined moment of time so that for a given rotor coil one of the following events occur:

- Electrically connect the rotor coil(s) to a DC power source so that polarity is also selectable;
- Electrically connect the rotor coil(s) to a selected phase of a multiphase AC power source so that polarity is also selectable;
- Short-circuit the rotor coil(s);
- Connect the rotor coil(s) to an electrical load;
- Leave the rotor coil(s) electrically disconnected.

In a preferred embodiment, the switches are mechanical switches such as relays or semiconductor switches. As already mentioned, the switches are adapted to electrically connect different rotor-coils. However, the switches are also adapted to provide a connection to the power supply. In one embodiment, a number of switches is the same as the number of (rotor) coils. Preferably, as the switches are located in or at the rotor-switching-device, they also rotate together with the rotor-switching-device.

In one embodiment, the rotor comprises means to provide or conduct electric power, in particular a slip ring or a rotary transformer. A slip ring is an electrical connector designed to carry current or signals from a stationary wire into a rotating device. Typically, it consists of a stationary graphite or metal contact (brush) which rubs on the outside diameter of a rotating metal ring. As the metal ring turns, the electrical current or signal is conducted through the stationary brush to the metal ring making the connection. Additional ring/brush assemblies are stacked along the rotating axis if more than one electrical circuit is needed. Either the brushes or the rings are stationary and the other component rotates. A rotary (rotatory) transformer is a specialized transformer used to couple electrical signals between two parts that rotate in relation to each other. Preferably, typical rotary transformers provide longer life than slip rings. Expediently, the rotor comprises a plurality of slip rings or rotary transformers, dependent on the power supply or the current(s) and voltage(s) that have to be conducted. Preferably, these means are arranged at a rotor axis of the rotor. Preferably, the power source is an AC- or DC-power source.

Expediently, the rotor-switching device may comprise at least one electric inverter, such as a DC-DC-inverter, a DC-AC-inverter, an AC-AC-inverter and/or an AC-DC-inverter. The same applies to the stator-switching-device.

In a preferred embodiment, the electric machine comprises a stator-switching-device which comprises a stator-control-unit, wherein the stator-switching-device comprises at least one switch which is adapted to electrically connect stator-coils and/or to provide or disconnect an electric connection to the power source. Preferably, these switches are of the same type and design as the switches of the rotor-switching-device. Thus, the same features and advantages apply. In particular, the stator-switching-device is adapted to activate preselected electrical switches at a predefined moment of time so that for a given stator coil one of the following events occur:

- Electrically connect the stator coil(s) to a selected phase of a multiphase AC power source so that polarity is also selectable;
- Electrically connect the stator coil(s) to a DC power source so that polarity is also selectable;
- Short-circuit the stator coil(s);
- Connect the stator coil(s) to an electrical load;
- Leave the stator coil(s) electrically disconnected.

Expediently, the stator comprises at least one stator-pole-pair, wherein the rotor comprises at least one rotor-pole-pair, wherein each pole-pair is formed by at least three coils. The rotor-switching-device is adapted to provide the rotor with DC and/or AC. In the same manner, the stator-switching-device is adapted to provide the stator with DC and/or AC. Generally, the electric machine can be operated in all its operation modes as generator and as motor. In one embodiment the electric machine can be operated as double fed machine. Double fed electric machines are such electric machines in which the rotor also takes active part in energy conversion process. The magnetic field created by the rotor is not static, but it is rotating relative to the rotor itself and electric energy is either "pumped" to the rotor or taken out of the rotor depending on current operation mode. In the present invention the rotor may create a variable pole magnetic field which rotates relative to the rotor itself. The rotor as well as the stator can generate rotating magnetic fields (using e.g. three-phase AC). Preferably, the stator-switching-device is adapted to vary a number of stator-pole-pairs by electrically connecting appropriate stator-coils, wherein the rotor-switching-device is adapted to vary a number of rotor-pole-pairs by electrically connecting appropriate rotor-coils. In one embodiment, the electric machine can be a single fed synchronous machine. In this case, the stator-coils are provided with AC and the rotor-coils are provided with DC. The synchronous machine is an AC rotating machine whose speed under steady state condition is proportional to the frequency of the current in its armature, respectively, in its rotor. This is also named the "synchronous speed". The synchronous speed N is given by

$$N = f / p \cdot 60 \text{ s/min}$$

where,

f is the frequency of the AC supply current (power frequency) in Hz, and
p is the is the number of pole pairs.

Each pole pair comprises two poles, a north- and a south-pole. Thus, the smallest pole pair number is "1" (e. g. 1 north pole and 1 south pole). Preferably, the number of stator-pole-pairs is the same as the number of rotor-pole-pairs. They correspond to each other. In other words, by varying the number of stator-pole-pairs, respectively, the number of rotor-pole-pairs, the number of magnetic poles and in consequence the synchronous speed N is changeable. Advantageously, the electric machine is adapted to change the pole number, respectively, the pole angular pitch while working (the pole pitch is defined as a peripheral distance between centres of two adjacent poles and the pole angular pitch is defined as the angle formed by the centres of two adjacent poles to the rotor's rotation axis). Thus, the electric machine can be operated at highest efficiency at different rotation speeds and a given power frequency. Another embodiment of the invention is capable to operate as double fed electric machine. In such case rotation speed N is a product of pole pair number and two frequencies - one supplied to the rotor and the other supplied to the stator. By varying pole pair numbers of the rotor and the stator the present invention increases functionality of a double fed machine too, as there will be at least two different synchronous rotation speeds for every two given supply frequencies. The electric machine can be operated as AC motor and as AC generator at a variety of output frequencies at a given rotation speed. The rotor is adapted to create a variable magnetic field which can vary on command in terms of direction and magnitude, relative to the rotor itself. The rotor comprises a rotor or rotation axis, respectively, and is supported inside the stator. Both, the stator and the rotor, extend along the rotation axis. The stator of the electric machine consists preferably of a laminated electrical steel core that comprises the stator-coils. The stator-switching-device preferably connects the stator-coils with a polyphase system. Polyphase systems have three or more energized electrical conductors carrying alternating currents with a definite time offset between the voltage waves in each conductor. With polyphase power a rotating magnetic field can be generated. Preferably, three coils are connected to form a three-phase winding, respectively, system. Advantageously, this connection is not fixed. The connection is provided by the stator-switching-device and so different coils and also a different number of coils can be connected to each and every AC phase to vary the number of poles, respectively, pole pairs of the stator and in consequence, the synchronous rotation speed of the electric machine. The same is valid for the rotor-switching-device and the rotor-coils. To further improve rotor rotation speed flexibility, the rotor-coils are preferably provided with AC by the rotor-switching-device, thus operating the electric machine as double fed machine. This means that both, the stator and the rotor, generate a rotating magnetic field using AC current. In one embodiment, the rotating magnetic fields of the stator and the rotor rotate in different directions.

Preferably, the stator comprises a plurality of stator-slots and the rotor comprises a plurality of rotor-slots, wherein each stator-coil is arranged in at least two stator-slots, and wherein each rotor-coil is arranged in at least two rotor-slots. Preferably, the rotor-coils as well as the stator-coils extend substantially parallel to the rotation axis. However, it is also possible that the rotor-coils and/or the stator-coils extend at least partly transverse or oblique to the rotation axis. In addition, the rotor-coils and/or the stator-coils can have at least partly a corrugated form along the rotation axis.

In a single fed electric machine embodiment there are preferably four rotor slots and six stator slots. The number of rotor coils is preferably four and the number of stator coils is preferably six. Each coil occupies two adjacent slots, thus a stator coil annular pitch is 60° and a rotor coil angular pitch is 90°. The rotor is expediently supplied with DC through two slip rings.

In a double fed electric machine embodiment there are preferably six rotors slots and preferably six stator slots. The number of rotor coils is preferably six and the number of stator coils is preferably six. Each coil occupies two adjacent slots, thus a stator coil angular pitch is 60° and a rotor coil angular pitch is 60. The rotor is expediently supplied with AC through slip rings.

It shall be understood that embodiments with different number of coils and slots, e. g. 18, 24 or 48 etc. are also possible and preferred.

Expediently, the electric machine, in particular the rotor, can be operated with DC and/or AC, wherein AC comprises at least 3 phases. In other words, a minimal number of phases is preferably 3 (phase A, phase B and phase C). It goes without saying that also polyphase systems with more phases are possible, e. g. 6 phases.

Advantageously, the electric machine can be operated as synchronous machine and as induction machine. In induction operation mode the rotor switching device switches rotor-coils in short and not to any of the AC phases or the DC power source. The rotating magnetic field created by the stator will induce electric currents in the rotor-coils which is the principle behind induction motors. By selecting a combination of coils and polarities to excite the rotor, the rotor-switching-device is capable of changing the magnetic pole number of the rotor. It is adapted to connect rotor-coils in short thus operating the electric machine in induction mode. This is useful when starting the electric machine and also during transition between two synchronous speeds. Electric power is delivered to the rotor via e. g. two slip rings or brushless via rotary transformers and rectifiers.

The rotor may be also connected to a multiphase AC source to operate as double fed machine to create a rotor rotating magnetic field. Multiphase AC is brought to the rotor switching device via slip rings (at least 3) or via a set of rotating transformers. By selecting a combination of coils and polarities to be connected to a certain phase, the magnetic pole number of the rotating magnetic field can be beneficially changed. A communication connection between the rotor switching device and the stator switching device or its control units, respectively, is used to coordinate both devices so that the pole pair number and the rotating magnetic field of the rotor and the pole pair number and the rotating magnetic field of the stator are for example the same. In particular, if the rotor-coils are connected in short by the rotor switching device, the electric machine will operate as single fed induction machine. If the frequency of the multiphase AC source supplied to the rotor drops to zero then the electric machine will operate as single fed synchronous machine. Further benefits can bring the ability to connect sensors to the rotor-switching-device to monitor key characteristics of the rotor during operation. For instance temperature, rotor coil electric currents and other important readings can be monitored inside the rotor and information passed to the stator-switching-device via the information channel or the communication connection, respectively, between the two switching devices, This way malfunctions can be anticipated before a major accident occurs. It is also possible a set of gyroscopic sensors inside the rotor to determine exact position of the rotor at a certain moment of time. This may eliminate the need of complicated other sensors mounted outside the rotor with the same function.

In both cases (rotor supplied with AC or DC), the stator may be designed or operated similarly. The stator-switching-device electrically connects the stator-coils to a multiphase AC source to create a rotating magnetic field. By selecting a combination of coils and polarities to be connected to a certain phase, the magnetic pole number of the rotating magnetic field can be beneficially changed. A communication connection between the stator switching device and the rotor switching device or its control units, respectively, is used to coordinate both devices so that rotor pole numbers and stator pole pair numbers are the same. If rotor speed is very different from synchronous speed then induction mode is activated (rotor switching device connects rotor-coils in short). When the rotor reaches speed close to synchronous speed then rotor-switching-device excites proper combination of rotor-coils to create rotor magnetic field with the same number of poles as the number of poles of momentary stator rotating magnetic field.

Another advantage presents the energy storage device inside the rotor. It can be a battery, capacitor or other device which stores electric energy. It can be used to supply power to the rotor switching device in case of power breakdown to the rotor. Using the supply from the energy storage device, the rotor switching device can perform a controlled emergency stop procedure in coordination with the stator switching device.

According to the invention, a method to operate an electric machine, comprising a stator and a rotor, wherein the rotor is adapted to rotate relatively to the stator, and wherein the rotor comprises a rotor-switching-device which is arranged at the rotor, comprises the steps:

- providing the stator with AC using a stator-switching device;
- providing the rotor with AC or DC or short-circuiting the rotor using the rotor-switching-device.

Advantageously, the method comprises also the steps:

- selecting a (proper) stator pole pair number using the stator-switching device;selecting (proper) corresponding operational mode for the rotor using the rotor-switching-device such as induction, synchronous or double fed.

The method according to the invention can include the features and advantages of the electric machine according to the invention and vice versa.

Additional advantages and features of the current invention are shown in the following description of preferred embodiments of the current invention with reference to the attached drawings. Single features or characteristics of respective embodiments are explicitly allowed to be combined within the scope of the current invention.

Figure 1: shows a perspective view of an exemplary single fed embodiment of an electric machine;

Figure 2a: shows a stator and rotor design of the electric machine of Fig. 1;

Figure 2b: shows a communication connection between a rotor-switching device and a stator-switching-device of the electric machine of Fig. 1

Figure 3: shows a perspective view of a double fed embodiment of an electric machine;

Figure 4a: shows a stator and rotor design of the electric machine of Fig. 3;

Figure 4b: shows a communication connection between a rotor-switching device and a stator-switching-device of the electric machine of Fig. 3;

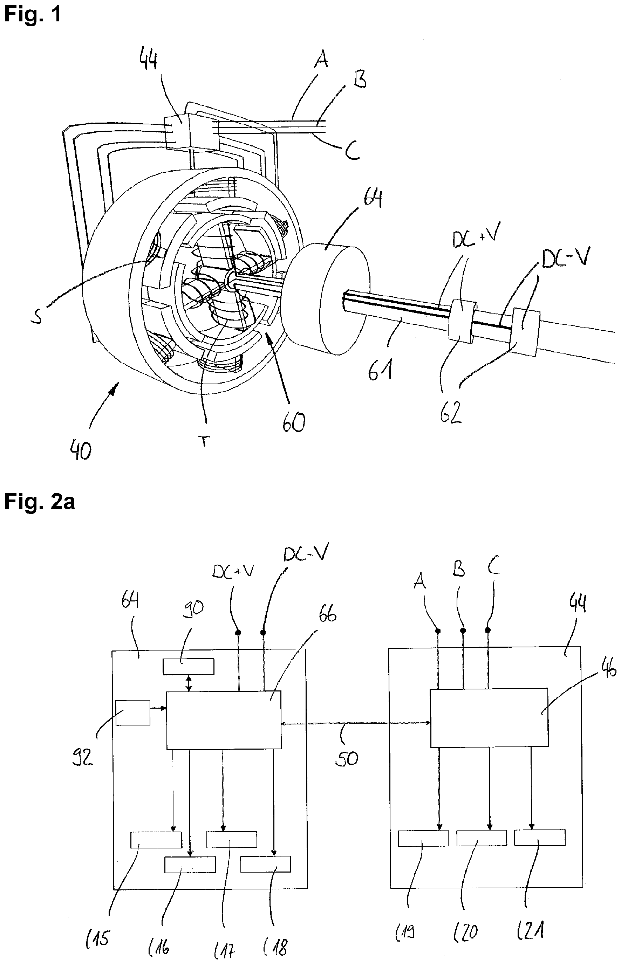

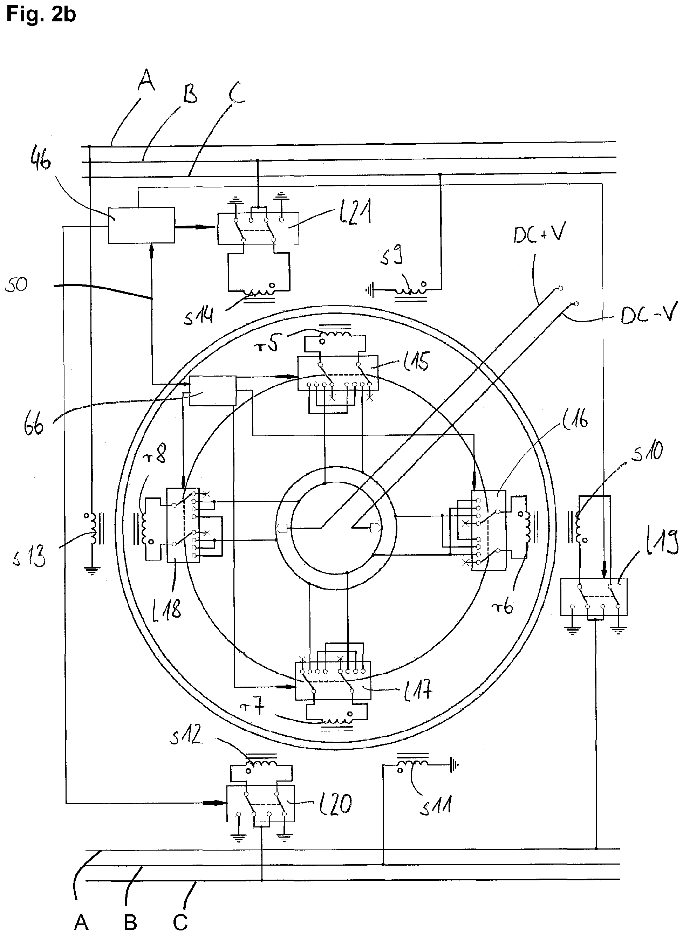

Referring now to **Fig. 1,** a perspective view of an electric machine 20 is shown. The electric machine 20 comprises a stator 40 and a rotor 60. A rotor-switching-device 64 is arranged at a rotor axis 61 of the rotor 60. Means for providing or conducting electric power 62 such as slip rings or rotary transformers are also arranged at the rotation axis 61. In this embodiment, they conduct current or voltages DC+V or DC-V, respectively, to the rotor-coils r of the rotor 60. The electric machine 20 furthermore comprises a stator-switching-device 44 that is electrically connected to an AC power source or to phases A, B and C, respectively. Thus, the stator-coils s of the stator 40 are provided with alternating current. This type of electric machine is named single fed machine. Figure 2a and 2b show the design of the electric machine 20 more detailed.

**Fig. 2a** shows a communication connection 50 between the rotor-switching-device 64 and the stator-switching device 44. In particular, a rotor-control-unit 66 is connected to a stator-control-unit 46. The rotor-switching-device 64 also comprises a sensor 92 and a rotor energy storage unit 90.

**Fig. 2b:** Switches I15, I16, I17 and I18 are operated by a rotor-control-unit 66 so that their switch position is the same and changed simultaneously from 1 to 4. Switches I19, I20 and I21 are operated by the stator-control-unit 46 so that their switch position is the same and changed simultaneously from 1 to 2. All switches depicted on Fig. 2a are shown in position 1. Below, different operation modes are described:

Four pole synchronous mode operation. Switches I19, I20 and I21 are switched to position 1. Stator-coil s10 is connected to phase A. Stator-coil s11 is connected to phase B. Stator-coil s12 is connected to phase C. Stator-coil s13 is connected to phase A. Stator-coil s14 is connected to phase B. Stator-coil s9 is connected to phase C. This forms a familiar four pole stator-coil configuration - ABCABC. Rotor switches I15, I16, I17 and I18 are switched to position 2. This way the rotor-coils r5, r6, r7 and r8 will create a 4 pole magnetic field SNSN (south-north-south-north). When rotor speed is synchronized with stator rotating 4 pole field the rotor will follow synchronously the stator rotating field.

Two pole synchronous mode operation: Switches I19, I20 and I21 are switched to position 2. Stator-coil s10 is connected in reverse to phase A. Stator-coil s11 is connected to phase B. Stator-coil s12 is connected in reverse to phase C. Stator-coil s13 is connected to phase A. Stator-coil s14 is connected in reverse to phase B. Stator-coil s9 is connected to phase. This forms a familiar two pole stator-coil configuration - A B- C A- B C-. Rotor switches I15, I16, I17 and I18 are switched to position 3. This way the rotor-coils r6 and r8 will create a 2 pole magnetic field SN. Rotor-coils r5 and r7 are connected in short to work in induction mode to assist the rotor to reach synchronous speed. When rotor speed is synchronized with stator rotating 2 pole field the rotor will follow synchronously the stator rotating field. Four pole induction mode operation: Switches I19, I20 and I21 are switched to position 1. Stator-coil s10 is connected to phase A. Stator-coil s11 is connected to phase B. Stator-coil s12 is connected to phase C. Stator-coil s13 is connected to phase A. Stator-coil s14 is connected to phase B. Stator-coil s9 is connected to phase C. This forms a familiar four pole stator-coil configuration -ABCABC. Rotor switches I15, I16, I17 and I18 are switched to position 4. This way the rotor-coils r5, r6, r7 and r8 are connected in short. Stator rotating field will induce currents in rotor-coils making the rotor follow stator field at sub synchronous speed.

Two pole induction mode operation: Switches I19, I20 and I21 are switched to position 2. Stator-coil s10 is connected in reverse to phase A. Stator-coil s11 is connected to phase B. Stator-coil s12 is connected in reverse to phase C. Stator-coil s13 is connected to phase A. Stator-coil s14 is connected in reverse to phase B. Stator-coil s9 is connected to phase C. This forms a familiar two pole stator-coil configuration - A B- C A- B C-. Rotor switches 115, 116, 117 and I18 are switched to position 4. This way the rotor-coils r5, r6, r7 and r8 are connected in short. Stator rotating field will induce currents in rotor-coils making the rotor follow stator field at sub synchronous speed.

Emergency stop: Rotor switches I15, I16, I17 and I18 are switched to position 1. All rotor-coils are open. The rotor will not produce any torque, regardless of presence of stator field and rotor power supply. In another embodiment single fed machine there may be a DC to DC inverter as part of the rotor switching device. This way high voltage DC can be supplied to slip rings and the built in rotor switching device DC to DC inverter to reduce the voltage to appropriate level. This way current over slip rings will be reduced bringing down losses and wear of the slip rings. Furthermore in another embodiment the brushes and slip rings can be replaced by a rotating transformer, having its primary coil stationary and its secondary coil mounted on the rotor and rotating along with it. This way AC will be supplied and integrated in rotor switching device AC to DC inverter should provide transition from AC to DC current needed to excite rotor-coils to produce magnetic field, static relative to the rotor. In this case brushes and slip rings are eliminated altogether.

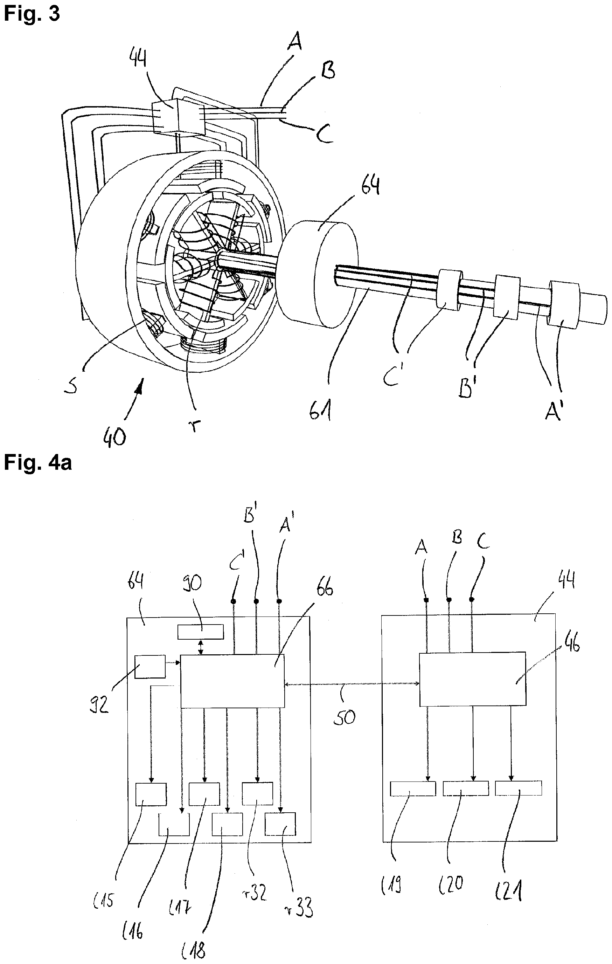

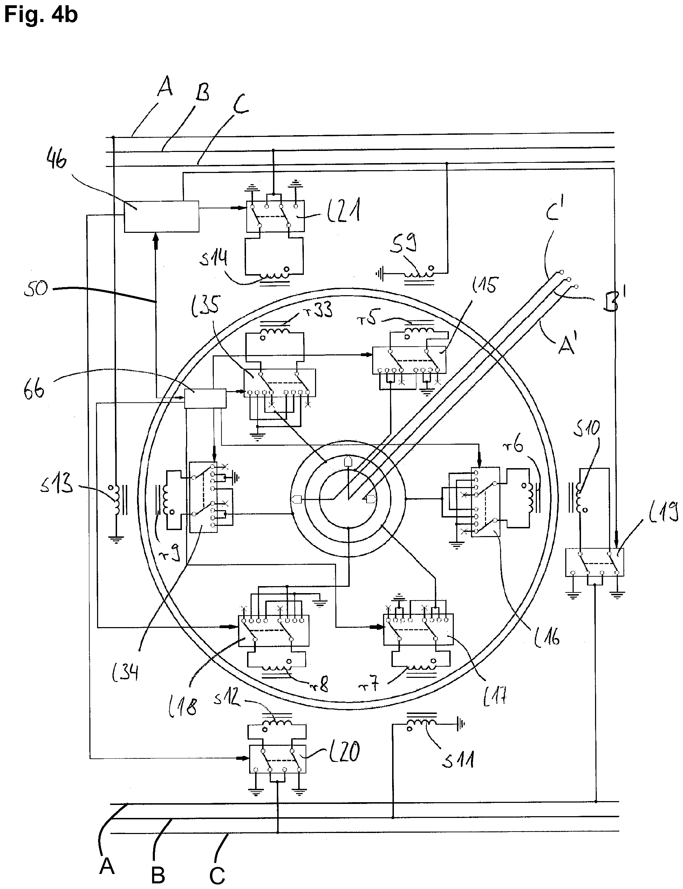

**Fig. 3** basically shows the same concept as Figure 1. However, a rotor 60 is provided with alternating current. This type of machine is named doubly fed machine. Figure 4b shows the design in detail.

**Fig. 4a** shows basically the same design as Figure 2b. However, according to the design of the electric machine of Figure 3, a rotor-switching-device 64 is provided with alternating current C', B', A'.

**Fig. 4b:** Switches I15, I16, I17, I18, I34 and I35 are operated by a rotor-control-unit 66 so that their switch position is the same and changed simultaneously from 1 to 4. Switches I19, I20 and I21 are operated by a stator-control-unit 46 so that their switch position is the same and changed simultaneously from 1 to 2. All switches depicted on Fig. 4a are shown in position 1. Below, different operation modes are described:

Four pole doubly fed mode operation: Switches I19, I20 and I21 are switched to position 1. Stator-coil s10 is connected to phase A. Stator-coil s11 is connected to phase B. Stator-coil s12 is connected to phase C. Stator-coil s13 is connected to phase A. Stator-coil s14 is connected to phase B. Stator-coil s9 is connected to phase C. This forms a familiar four pole stator-coil configuration -ABCABC. Rotor switches I15, I16, I17, I18, I34 and I35 are switched to position 2. Rotor-coil r5 is connected to phase A', rotor-coil r6 is connected to phase C', rotor-coil r7 is connected to phase B', rotor-coil r8 is connected to phase A', rotor-coil r32 is connected to phase C', rotor-coil r33 is connected to phase B'. These connections form a four pole rotating field - A'C'B'A'C'B'. This field rotates relative to the rotor and its direction is opposite to the stator rotating field. This way the rotor will accelerate to an angular speed which the sum of the angular speeds of both stator and rotor rotating fields.

Two pole doubly fed mode operation: Switches I19, I20 and I21 are switched to position 2. Stator-coil s10 is connected in reverse to phase A. Stator-coil s11 is connected to phase B. Stator-coil s12 is connected in reverse to phase C. Stator-coil s13 is connected to phase A. Stator-coil r14 is connected in reverse to phase B. Stator-coil s9 is connected to phase C. This forms a familiar two pole stator-coil configuration - A B- C A- B C-. Rotor switches I15, I16, I17, I18, I34 and I35 are switched to position 3. Rotor-coil r5 is connected to phase A', rotor-coil r6 is connected in reverse to phase C', rotor-coil r7 is connected to phase B', rotor-coil r8 is connected in reverse to phase A', rotor-coil r32 is connected to phase C', rotor-coil r33 is connected in reverse to phase B'. These connections form a two pole rotating field - A' C'- B' A'- C' B'-. This field rotates relative to the rotor and its direction is opposite to the stator rotating field. This way the rotor will accelerate to an angular speed which the sum of the angular speeds of both stator and rotor rotating fields.

Four pole induction mode operation: Switches I19, I20 and I21 are switched to position 1. Stator-coil s10 is connected to phase A. Stator-coil s11 is connected to phase B. Stator-coil s12 is connected to phase C. Stator-coil s13 is connected to phase A. Stator-coil s14 is connected to phase B. Stator-coil s9 is connected to phase C. This forms a familiar four pole stator-coil configuration -ABCABC. Rotor switches I15, I16, I17, I18, I34 and I35 are switched to position 4. This way the rotor-coils r5, r6, r7, r8, r32 and r33 are connected in short. Stator rotating field will induce currents in rotor-coils making the rotor follow stator field at sub synchronous speed.

Two pole induction mode operation: Switches I19, I20 and I21 are switched to position 2. Stator-coil s10 is connected in reverse to phase A. Stator-coil s11 is connected to phase B. Stator-coil s12 is connected in reverse to phase C. Stator-coil s13 is connected to phase A. Stator-coil s14 is connected in reverse to phase B. Stator-coil s9 is connected to phase C. This forms a familiar two pole stator-coil configuration - A B - C A - B C . Rotor switches I15, I16, I17, I18, I34 and I35 are switched to position 4. This way the rotor-coils r5, r6, r7, r8, r32 and r33 are connected in short. Stator rotating field will induce currents in rotor-coils making the rotor follow stator field at sub synchronous speed.

Emergency stop: Rotor switches I15, I16, I17, I18, I34 and I35 are switched to position 1. All rotor-coils r5, r6, r7, r8, r32 and r33 are open. The rotor will not produce any torque as no current would pass through rotor-coils, regardless of presence of stator field and rotor AC power supply. In another embodiment of doubly fed machine there may be a DC to AC inverter as part of the rotor switching device. This way high voltage DC can be supplied to slip rings and the built in DC to AC inverter to supply rotor-coils with multiphase AC to produce rotating magnetic field. Furthermore in another embodiment the brushes and slip rings can be replaced by a rotating transformer, having its primary coil stationary and its secondary coil mounted on the rotor and rotating along with it. This way AC will be supplied and internal AC to AC inverter should provide transition from AC to AC current again to supply rotor-coils with multiphase AC to produce rotating magnetic field by the rotor-coils. In this case brushes and slip rings are eliminated altogether. In both cases of DC to AC inverter with slip rings or AC to AC inverter being used the inverter should be reversible so that when the rotor is spinning at sub synchronous speed electric energy induced in rotor-coils should be transported out of the rotor through the slip rings or rotating transformer.

Reference numerals

| | |
|---|---|
| 20 | electric machine |
| 40 | stator |
| 44 | stator-switching-device |
| 46 | stator-control-unit |
| 50 | communication connection |
| 60 | rotor |
| 61 | rotor axis |
| 62 | means to conduct/provide electric power |
| 66 | rotor-control-unit |
| 64 | rotor-switching device |
| 90 | rotor energy storage unit |
| 92 | set of sensors |
| AC | alternating current |
| DC, DC +V, DC -V | direct current |
| A, B, C ... | phases (stator) |
| A', B', C' ... | phases (rotor) |
| V1, V2, V3 ... | voltages |
| R | rotation axis |
| s, s1, s2, s3 ... | stator-coils |
| r, r1, r2, r3 ... | rotor-coils |
| I, I1, I2, I3, ... | switches |

**Claims**

1. Electric machine (20)
   comprising a stator (40), a stator-switching-device (44) and a rotor (60), wherein the rotor (60) is adapted to rotate relatively to the stator (40), and wherein the rotor (60) comprises a rotor-switching-device (64) which is arranged at the rotor (60),
   wherein the rotor-switching-device (64) comprises at least one switch (I) which is adapted to electrically connect rotor-coils (r1, r2, r3 ...), and wherein the stator-switching-device (44) comprises at least one switch (I) which is adapted to electrically connect stator-coils (s1, s2, s3 ...), **characterized in that** the stator-switching-device (44) is adapted to vary a number of stator-pole-pairs, and **in that** the rotor-switching-device (64) is adapted to vary a number of rotor-pole-pairs.

**2.** Electric machine (20) according to claim 1,
wherein the at least one switch (I) of the rotor switching device (64) is adapted to provide or disconnect an electric connection to a power source.

**3.** Electric machine (20) according to claims 1 or 2,
wherein the rotor (60) comprises means (62) to provide or conduct electric power, in particular a slip ring or a rotary transformer.

**4.** Electric machine (20) according to any of the preceding claims,
wherein the rotor-switching-device (64) comprises at least one electric inverter, such as a DC-DC-inverter, a DC-AC-inverter, an AC-AC-inverter and/or an AC-DC-inverter.

**5.** Electric machine (20) according to any of the preceding claims,
wherein the at least one switch (I) of the stator switching device (44) is adapted to provide an electric connection to a power source.

**6.** Electric machine (20) according to any of the claims 4-5,
wherein the rotor-switching-device (64) and the stator-switching-device (44) are connected by a communication connection (50).

**7.** Electric machine (20) according to any of the claims 2-6,
wherein the power source is an AC- or DC-power source (84, 84').

**8.** Electric machine (20) according to any of the preceding claims,
wherein the rotor (60) comprises at least one sensor (92) which is adapted to provide information about a status of the rotor (60), such as rotor position, rotor internal temperature, electric currents in rotor coils, power supply conditions, vibration levels etc.

**9.** Electric machine (20) according to any of the preceding claims,
wherein the rotor-switching-device (64) comprises an rotor energy-storage-unit (90).

**10.** Method to operate an electric machine (20),
comprising a stator (40) and a rotor (60),
wherein the rotor (60) is adapted to rotate relatively to the stator (40), and wherein the rotor (60) comprises a rotor-switching-device (64) which is arranged at the rotor (60),
comprising the steps:

- providing the stator (40) with AC using a stator-switching-device (44);
- providing the rotor (60) with AC or DC or short-circuiting the rotor (60) using the rotor-switching-device (64);
- coordinating the stator-switching device (44) and the rotor-switching device (64) so that a rotor pole pair number and a stator pole pair number are the same.

**Patentansprüche**

**1.** Elektrische Maschine (20), die einen Stator (40), eine Statorschaltvorrichtung (44) und einen Rotor (60) aufweist, wobei der Rotor (60) geeignet ist, bezüglich des Stators (40) zu drehen, und wobei der Rotor (60) eine Rotorschaltvorrichtung (64) aufweist, die am Rotor (60) angeordnet ist,
wobei die Rotorschaltvorrichtung (64) mindestens einen Schalter (I) aufweist, der geeignet ist, Rotorwicklungen (r1, r2, r3, ...) elektrisch zu verbinden, und wobei die Statorschaltvorrichtung (44) mindestens einen Schalter (I) aufweist, der geeignet ist, Statorwicklungen (s1, s2, s3, ...) elektrisch zu verbinden, **dadurch gekennzeichnet, dass** die Statorschaltvorrichtung (44) geeignet ist, eine Stator-Polpaarzahl zu ändern, und dass die Rotorschaltvorrichtung (64) geeignet ist, eine Rotor-Polpaarzahl zu ändern.

**2.** Elektrische Maschine (20) nach Anspruch 1, wobei der mindestens eine Schalter (I) der Rotorschaltvorrichtung (64) geeignet ist, eine elektrische Verbindung mit einer Energiequelle zu liefern oder zu unterbrechen.

**3.** Elektrische Maschine (20) nach den Ansprüchen 1 oder 2, wobei der Rotor (60) Einrichtungen (62) aufweist, um elektrische Energie zu liefern oder zu leiten, insbesondere einen Schleifring oder einen Drehtransformator.

4. Elektrische Maschine (20) nach einem der vorhergehendenden Ansprüche, wobei die Rotorschaltvorrichtung (64) mindestens einen elektrischen Wandler aufweist, wie einen DC/DC-Wandler, einen DC/AC-Wandler, einen AC/AC-Wandler und/oder einen AC/DC-Wandler.

5. Elektrische Maschine (20) nach einem der vorhergehendenden Ansprüche, wobei der mindestens eine Schalter (I) der Statorschaltvorrichtung (44) geeignet ist, eine elektrische Verbindung mit einer Energiequelle zu liefern.

6. Elektrische Maschine (20) nach einem der Ansprüche 4-5, wobei die Rotorschaltvorrichtung (64) und die Statorschaltvorrichtung (44) durch eine Kommunikationsverbindung (50) verbunden sind.

7. Elektrische Maschine (20) nach einem der Ansprüche 2-6, wobei die Energiequelle eine AC- oder DC-Energiequelle (84, 84') ist.

8. Elektrische Maschine (20) nach einem der vorhergehendenden Ansprüche, wobei der Rotor (60) mindestens einen Sensor (92) aufweist, der geeignet ist, eine Information über einen Zustand des Rotors (60) zu liefern, wie die Rotorstellung, Rotor-Innentemperatur, elektrische Ströme in Rotorwicklungen, Energieversorgungsbedingungen, Schwingungspegel, usw.

9. Elektrische Maschine (20) nach einem der vorhergehendenden Ansprüche, wobei die Rotorschaltvorrichtung (64) eine Rotor-Energiespeichereinheit (90) aufweist.

10. Verfahren für den Betrieb einer elektrischen Maschine (20), die einen Stator (40) und einen Rotor (60) aufweist, wobei der Rotor (60) geeignet ist, bezüglich des Stators (40) zu drehen, und wobei der Rotor (60) eine Rotorschaltvorrichtung (64) aufweist, die am Rotor (60) angeordnet ist, das die Schritte aufweist:

   - Versorgen des Stators (40) mit AC unter Verwendung einer Statorschaltvorrichtung (44);
   - Versorgen des Rotors (60) mit AC oder DC oder Kurzschließen des Rotors (60) unter Verwendung der Rotorschaltvorrichtung (64);
   - Koordinieren der Statorschaltvorrichtung (44) und der Rotorschaltvorrichtung (64), so dass eine Rotor-Polpaarzahl und eine Stator-Polpaarzahl gleich sind.

**Revendications**

1. Machine électrique (20) comprenant un stator (40), un dispositif de commutation de stator (44) et un rotor (60), dans laquelle le rotor (60) est adapté à tourner sélectivement par rapport au stator (40), et
dans laquelle le rotor (60) comprend un dispositif de commutation de rotor (64) qui est agencé au niveau du rotor (60),
dans laquelle le dispositif de commutation de rotor (64) comprend au moins un commutateur (I) qui est adapté à connecter électriquement des bobinages de rotor (r, r2, r3, ...), et
dans laquelle le dispositif de commutation de stator (44) comprend au moins un commutateur (I) qui est adapté à connecter électriquement des bobinages de stator (s, s2, s3, ...),
**caractérisé en ce que**
le dispositif de commutation de stator (44) est adapté à faire varier un nombre de paires de pôles de stator, et **en ce que** le dispositif de commutation de rotor (64) est adapté à faire varier un nombre de paires de pôles de rotor.

2. Machine électrique (20) selon la revendication 1,
dans laquelle ledit au moins un commutateur (I) du dispositif de commutation de rotor (64) est adapté à établir ou à déconnecter une connexion électrique vers une source de puissance.

3. Machine électrique (20) selon les revendications 1 ou 2,
dans laquelle le rotor (60) comprend un moyen (62) pour fournir ou pour conduire une puissance électrique, en particulier une bague glissante ou un transformateur rotatif.

4. Machine électrique (20) selon l'une quelconque des revendications précédentes,
dans laquelle le dispositif de commutation de rotor (64) comprend au moins un convertisseur électrique, comme un convertisseur continu/continu, un convertisseur continu/alternatif, et un convertisseur alternatif/alternatif et/ou un convertisseur alternatif/continu.

**5.** Machine électrique (20) selon l'une quelconque des revendications précédentes, dans laquelle ledit au moins un commutateur (I) du dispositif de commutation de stator (44) est adapté à établir une connexion électrique vers une source de puissance.

**6.** Machine électrique (20) selon l'une quelconque des revendications 4 et 5, dans laquelle le dispositif de commutation de rotor (64) et le dispositif de commutation de stator (44) sont connectés par une connexion de communication (50).

**7.** Machine électrique (20) selon l'une quelconque des revendications 2 à 6, dans laquelle la source de puissance est une source de puissance en courant alternatif ou en courant continu (84, 84').

**8.** Machine électrique (20) selon l'une quelconque des revendications précédentes, dans laquelle le rotor (60) comprend au moins un capteur (92) qui est adapté à fournir une information concernant un état du rotor (60), comme une position du rotor, une température interne au rotor, les courants électriques dans les bobinages de rotor, les conditions d'alimentation de puissance, les niveaux de vibration, etc.

**9.** Machine électrique (20) selon l'une quelconque des revendications précédentes, dans laquelle le dispositif de commutation de rotor (64) comprend une unité de stockage d'énergie de rotor (90).

**10.** Procédé pour le fonctionnement d'une machine électrique (20), comprenant un stator (40) et un rotor (60), dans laquelle le rotor (60) est adapté à tourner par rapport au stator (40), et dans laquelle le rotor (60) comprend un dispositif de commutation de rotor (64) qui est agencé au niveau du rotor (60), comprenant les étapes consistant à :

- alimenter le stator (40) avec du courant alternatif en utilisant un dispositif de commutation de stator (44) ;
- alimenter le rotor (60) avec courant alternatif ou continu, ou mettre en court-circuit le rotor (60), en utilisant le dispositif de commutation de rotor (64) ;
- coordonner le dispositif de commutation de stator (44) et le dispositif de commutation de rotor (64) de sorte qu'un nombre de paires de pôles de rotor et un nombre de paires de pôles de stator sont les mêmes.

**Fig. 1**

**Fig. 2a**

**Fig. 2b**

**Fig. 3**

**Fig. 4a**

# Fig. 4b

**EP 3 044 860 B1**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 20130069566 A1